# EUROPÄISCHE PATENTSCHRIFT

(11) **EP 1 645 731 B1**
(45) Veröffentlichungstag und Bekanntmachung des Hinweises auf die Patenterteilung: **28.02.2007**
(21) Anmeldenummer: 05106865.8
(22) Anmeldetag: 26.07.2005
(51) Int. Cl.: F01N 3/36, F01N 3/20

(54) **Abgasanlage für eine Brennkraftmaschine**
Exhaust system for an internal combustion engine
Dispositif d'échappement d'un moteur à combustion interne

(30) Priorität: 01.10.2004 DE 102004048336
(43) Veröffentlichungstag der Anmeldung: 12.04.2006
(73) Patentinhaber: J. Eberspächer GmbH & Co. KG, 73730 Esslingen (DE)
(72) Erfinder: Gaiser, Gerd, 72768, Reutlingen (DE); Hanitzsch, Robert, 71394 Kernen (DE); Rudelt, Josef, 73773, Aichwald (DE)
(74) Vertreter: Patentanwalts-Partnerschaft Rotermund + Pfusch + Bernhard

(56) Entgegenhaltungen:
- EP-A- 1 054 139
- EP-A- 1 149 991
- EP-A- 1 209 331
- DE-A1- 19 625 447
- US-A1- 2004 081 592

## Beschreibung

Die vorliegende Erfindung betrifft eine Abgasanlage für eine Brennkraftmaschine, insbesondere in einem Kraftfahrzeug, wie z.B. aus DE 196 25 447 A1 bekannt.

Eine moderne Abgasanlage umfasst einen Abgasstrang, der das Abgas von der Brennkraftmaschine abführt und zur Nachbehandlung der Abgase, insbesondere zu deren Reinigung, dient. Beispielsweise kann eine Abgasanlage im Abgasstrang ein Partikelfilter enthalten, das im Abgas der Brennkraftmaschine, insbesondere eines Dieselmotors, mitgeführte Partikel, vorzugsweise Rußpartikel, herausfiltert und einlagert. Ein derartiges Partikelfilter muss in zeitlichen Abständen regeneriert werden, um einen übermäßigen Gegendruckanstieg bei der Durchströmung des Partikelfilters zu vermeiden. Eine derartige Regeneration kann durch eine kurzfristige Temperaturerhöhung im Abgas initiiert werden. Die im Normalbetrieb der Brennkraftmaschine auftretenden Abgastemperaturen reichen jedoch hierzu nicht aus. Dementsprechend müssen zusätzliche Maßnahmen ergriffen werden, um die Abgastemperatur entsprechend zu erhöhen. Eine Möglichkeit zur Temperaturerhöhung im Abgas wird darin gesehen, Sekundär-Kraftstoff in das Abgas einzubringen. Dieser Sekundär-Kraftstoff kann dann mit dem im mageren Abgas enthaltenen Restsauerstoff reagieren, was zur gewünschten Temperaturerhöhung führt. Zur Unterstützung der Oxidation des Sekundär-Kraftstoffs kann stromauf des Partikelfilters ein Oxidationskatalysator im Abgasstrang angeordnet sein. Ebenso ist es möglich, das Partikelfilter selbst katalytisch aktiv auszugestalten.

Entsprechendes gilt auch für einen NOₓ-Speicherkatalysator, der zusätzlich oder alternativ zum Partikelfilter im Abgasstrang angeordnet sein kann, um Stickoxide aus den Abgasen zu entfernen. Auch ein NOₓ-Speicherkatalysator muss hin und wieder regeneriert werden, wozu bei Betriebstemperatur eine reduzierende Atmosphäre im Abgas benötigt wird.

Problematisch bei der Einbringung von Sekundär-Kraftstoff in das Abgas ist der Umstand, dass der Sekundär-Kraftstoff für eine möglichst vollständige Oxidation dampfförmig vorliegen muss. Bei niedrigen Abgastemperaturen lässt sich jedoch eine ausreichende Verdampfung des in den Abgasstrang eingespritzten Sekundär-Kraftstoffs nicht gewährleisten.

Die vorliegende Erfindung beschäftigt sich mit dem Problem, für eine Abgasanlage der eingangs genannten Art eine verbesserte oder zumindest eine andere Ausführungsform anzugeben, bei der insbesondere die Verdampfung des dem Abgas zugeführten Sekundär-Kraftstoffs auch bei niedrigeren Abgastemperaturen verbessert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Sekundär-Kraftstoff nicht direkt dem im Abgasstrang transportierten Abgasstrom zuzuführen, sondern zunächst in einen vom Abgasstrom abgezweigten Abgasteilstrom einzubringen und anschließend den insoweit modifizierten Abgasteilstrom in den Abgasgesamtstrom zurückzuführen. Die Einbringung des Sekundär-Kraftstoffs in den Abgasteilstrom erfolgt dabei in einem Zirkulationsraum einer Rezirkulationseinheit, die auf entsprechende Weise an den Abgasstrang angeschlossen ist. Da die Einleitung des Sekundär-Kraftstoffs im Zirkulationsraum separiert von der im Abgasstrang geführten Abgashauptströmung erfolgt, können im Zirkulationsraum Randbedingungen geschaffen werden, welche eine vollständige Verdampfung des eingebrachten Sekundär-Kraftstoffs unterstützen. Beispielsweise können im Zirkulationsraum die Strömungsgeschwindigkeit, der Abgasmassenstrom und die Temperatur im wesentlichen unabhängig von den entsprechenden Werten im Abgasstrang gewählt werden. Im Zirkulationsraum lassen sich somit für die Verdampfung besonders geeignete Bedingungen schaffen, was eine vollständige Verdampfung des eingebrachten Sekundär-Kraftstoffs vereinfacht.

Gemäß einer vorteilhaften Ausführungsform kann der Zirkulationsraum zylindrisch ausgebildet sein und einen Längsabschnitt des Abgasstrangs unter Ausbildung einer Verbindungsöffnung schneiden, derart, dass sich eine Längsrichtung des Zirkulationsraums gegenüber einer Längsrichtung des Längsabschnitts des Abgasstrangs geneigt erstreckt. Die Verbindungsöffnung weist eine Anströmkante auf, über die der Abgasteilstrom aus dem Abgasstrang in den Zirkulationsraum eindringt. Des weiteren weist die Verbindungsöffnung eine Abströmkante auf, die im Abgasstrang stromauf der Anströmkante angeordnet ist und über die der modifizierte Abgasteilstrom aus dem Zirkulationsraum in den Abgasstrang zurückgeführt wird. Eine derartige Ausführungsform zeichnet sich durch einen konstruktiv einfachen Aufbau aus und kann dementsprechend preiswert realisiert werden. Insbesondere lassen sich dabei die Abzweigung und Rückführung des Abgasteilstroms besonders einfach realisieren.

Zweckmäßig kann im Zirkulationsraum ein Verdampfungskörper angeordnet sein, den die Sekundär-Kraftstoffzuführung mit flüssigem Sekundär-Kraftstoff beaufschlagt und an dem der Sekundär-Kraftstoff verdampft und vom Abgasteilstrom aufgenommen wird. Durch die Integration eines derartigen Verdampfungskörpers in den Zirkulationsraum kann die Verdampfungswirkung erheblich verbessert werden.

Gemäß einer Weiterbildung kann der Verdampfungskörper hülsenförmig ausgestaltet und koaxial im zylindrischen Zirkulationsraum angeordnet sein, wobei dann die Sekundär-Kraftstoffzuführung eine Innenseite des Verdampfungskörpers mit Sekundär-Kraftstoff beaufschlagt, während der Verdampfungskörper den verdampften Sekundär-Kraftstoff an einer Außenseite dem Abgasteilstrom aussetzt. Auf diese Weise wird erreicht, dass der Abgasteilstrom nur verdampften Sekundär-Kraftstoff mitnehmen kann, so dass letztlich auch nur verdampfter Sekundär-Kraftstoff in den Abgasstrang zurückgelangt. Die Wirkungsweise der Rezirkulationseinheit im Hinblick auf die Einbringung von verdampftem Sekundär-Kraftstoff in das Abgas wird dadurch zusätzlich gesteigert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte, schaltplanartige Prinzipdarstellung einer Brennkraftmaschine, die mit einer Abgasanlage nach der Erfindung ausgestattet ist,
- Fig. 2: eine vergrößerte Ansicht der Abgasanlage in einem mit einer Rezirkulationseinheit versehenen Abschnitt,
- Fig. 3: einen Längsschnitt durch den Abschnitt aus Fig. 2,
- Fig. 4: eine teilweise geschnittene Draufsicht auf den Abschnitt aus Fig. 2,
- Fig. 5: eine perspektivische Ansicht wie in Fig. 2, jedoch teilweise geschnitten und aus eine anderen Blickrichtung,
- Fig. 6: einen Längsschnitt wie in Fig. 3, jedoch bei einer anderen Ausführungsform.

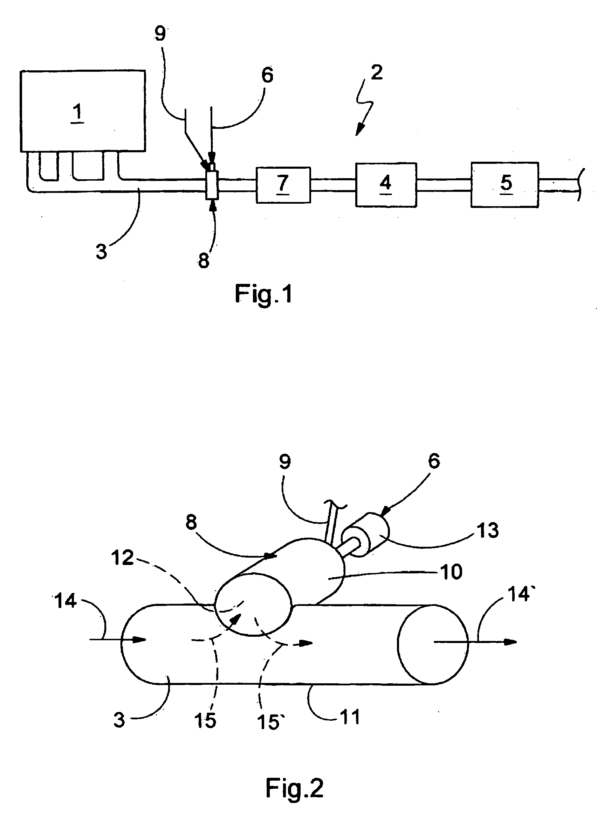

Entsprechend Fig. 1 ist eine Brennkraftmaschine 1, die als Ottomotor oder vorzugsweise als Dieselmotor ausgestaltet sein kann, mit einer Abgasanlage 2 ausgestattet, welche die Abgase der Brennkraftmaschine 1 von dieser abführt und einer Nachbehandlung zuführt. Üblicherweise ist die Brennkraftmaschine 1 zusammen mit der Abgasanlage 2 in einem Kraftfahrzeug angeordnet.

Die Abgasanlage 2 umfasst einen Abgasstrang 3, der die von der Brennkraftmaschine 1 erzeugten Abgase aufnimmt und von der Brennkraftmaschine 1 abführt. Im Abgasstrang 3 kann ein Partikelfilter 4 angeordnet sein, das Partikel, insbesondere Rußpartikel, die im Abgas der Brennkraftmaschine 1 enthalten sind, herausfiltert und einlagert. Zusätzlich oder alternativ zum Partikelfilter 4 kann im Abgasstrang 3 ein NOₓ-Speicherkatalysator 5 angeordnet sein, der im Abgas enthaltene Stickoxide adsorbiert. Zur Regeneration des Partikelfilters 4 und/oder des NOₓ-Speicherkatalysator 5 ist es erforderlich, im Partikelfilter 4 bzw. im NOₓ-Speicherkatalysator 5 eine entsprechende Temperaturerhöhung herbeizuführen. Erreicht wird dies bei der hier gezeigten Abgasanlage 2 mit Hilfe von Sekundär-Kraftstoff, der in das Abgas eingebracht wird. Zu diesem Zweck ist die Abgasanlage 2 mit einer Sekundär-Kraftstoffzuführung 6 ausgestattet, die den zur Einbringung in das Abgas benötigten Sekundär-Kraftstoff zuführt. Beim Sekundär-Kraftstoff handelt es sich zweckmäßig um denselben Kraftstoff, mit dem auch die Brennkraftmaschine 1 arbeitet, also Benzin oder Diesel.

Der in das Abgas eingebrachte Sekundär-Kraftstoff soll in Verbindung mit einem entsprechenden Oxidator, vorzugsweise Sauerstoff aus Luft oder Restsauerstoff aus dem Abgas, oxidieren. Hierbei wird Wärme freigesetzt, die zur Temperaturerhöhung des Abgases und somit des Partikelfilters 4 bzw. des NOₓ-Speicherkatalysators 5 genutzt werden kann. Zum Initiieren bzw. zum Unterstützen dieser Oxidation des Sekundär-Kraftstoffs kann im Abgasstrang 3 stromauf des Partikelfilters 4 und/oder stromauf des NOₓ-Speicherkatalysators 5 ein Oxidationskatalysator 7 angeordnet sein. Es ist klar, dass ein derartiger Oxidationskatalysator 7 grundsätzlich auch in das Partikelfilter 4 integriert sein kann, beispielsweise in Form einer entsprechenden katalytisch aktiven Beschichtung.

Erfindungsgemäß ist die Abgasanlage 2 außerdem mit einer Rezirkulationseinheit 8 ausgestattet. An die Rezirkulationseinheit 8 ist die Sekundär-Kraftstoffzuführung 6 angeschlossen, und die Rezirkulationseinheit 8 ist an den Abgasstrang 3 angeschlossen. Auf diese Weise wird der Sekundär-Kraftstoff von der Sekundär-Kraftstoffzuführung 6 nicht direkt in den Abgasstrang 3 eingeleitet, sondern zunächst in die Rezirkulationseinheit 8 und somit über bzw. durch diese indirekt in den Abgasstrang 3.

Bei der hier gezeigten Ausführungsform ist außerdem optional eine Sekundär-Luftzuführung 9 vorgesehen, mit deren Hilfe Sekundär-Luft in den Abgasstrang 3 eingeleitet werden kann. Auch die Sekundär-Luftzuführung 9 ist an die Rezirkulationseinheit 8 angeschlossen, so dass auch die Einbringung von Sekundär-Luft in den Abgasstrang 3 nicht direkt, sondern indirekt über bzw. durch die Rezirkulationseinheit 8 erfolgt.

Entsprechend Fig. 2 kann die Rezirkulationseinheit 8 ein zylindrisches Gehäuse 10 aufweisen, das seitlich an einem Längsabschnitt 11 des Abgasstrangs 3 angesetzt ist. Exemplarisch ist hier der Abgasstrang 3 im genannten Längsabschnitt 11 ebenfalls zylindrisch geformt. Die Rezirkulationseinheit 8 enthält in ihrem Inneren einen Zirkulationsraum 12, in den die Sekundär-Kraftstoffzuführung 6 den Sekundär-Kraftstoff einbringt, beispielsweise mit Hilfe einer Einspritzdüse 13. Von einem Abgashauptstrom 14, der im Abgasstrang 3 strömt, wird ein Abgasteilstrom 15 in den Zirkulationsraum 12 eingeleitet. Im Zirkulationsraum 12 wird dann in diesen Abgasteilstrom 15 der Sekundär-Kraftstoff eingebracht. Insoweit wird der Abgasteilstrom 15 in gewisser Weise modifiziert. Dieser modifizierte Abgasteilstrom 15' wird dann aus dem Zirkulationsraum 12 herausgeführt und in den Abgasstrang 3, also in den Abgashauptstrom 14 zurückgeführt. Der auf diese Weise modifizierte, insbesondere angefettete Abgashauptstrom ist in Fig. 2 mit 14' bezeichnet. Wesentlich ist somit, dass der Sekundär-Kraftstoff nicht direkt in den Abgashauptstrom 14 eingebracht wird, sondern in einen vom Abgashauptstrom 14 separierten Abgasteilstrom 15, und dass erst der modifizierte Abgasteilstrom 15' in den Abgashauptstrom 14 rückgeführt wird.

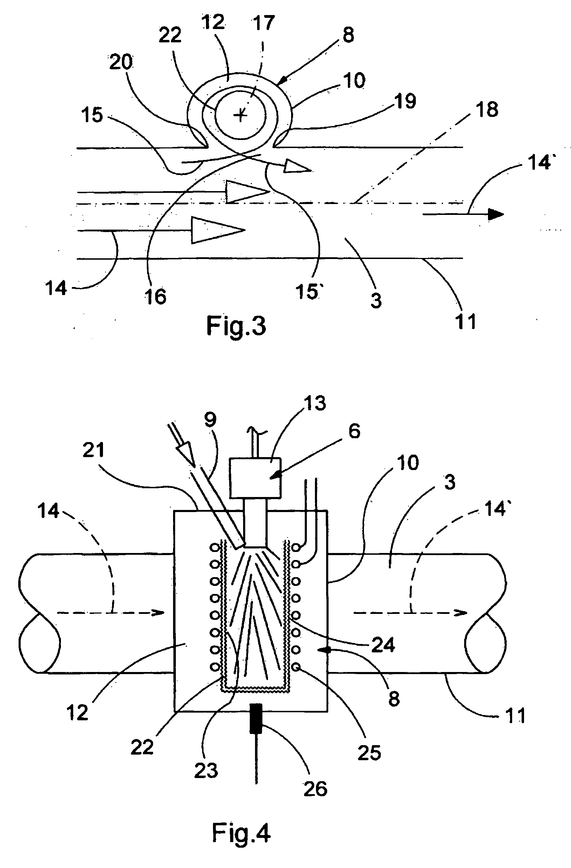

Entsprechend Fig. 3 ist der Zirkulationsraum 12 zylindrisch ausgebildet und am Längsabschnitt 11 des Abgasstrangs 3 so angeordnet, dass er diesen unter Ausbildung einer Verbindungsöffnung 16 schneidet. Dabei verläuft eine Längsrichtung 17 des Zirkulationsraums 12 gegenüber einer Längsrichtung 18 des Längsabschnitts 11 des Abgasstrangs 3 geneigt. Bevorzugt steht die Längsrichtung 17 des Zirkulationsraums 12 wie hier senkrecht auf der Längsrichtung 18 des Längsabschnitts 11.

Die Verbindungsöffnung 16 umfasst eine Anströmkante 19 und eine Abströmkante 20, die im Abgasstrang 3 bezüglich der Anströmkante 19 stromauf angeordnet ist. Über die Anströmkante 19 kann der Abgasteilstrom 15 aus dem Abgasstrang 3 in den Zirkulationsraum 12 eindringen. Im Unterschied dazu kann über die Abströmkante 20 der modifizierte Abgasteilstrom 15' aus dem Zylinderraum 12 in den Abgasstrang 3 zurückgeführt werden.

Wie aus Fig. 3 zu entnehmen ist, ergibt sich dabei im Zirkulationsraum 12 eine Art Zyklonströmung für den Abgasteilstrom 15 bzw. 15', die im wesentlichen um die Längsrichtung 17 des Zirkulationsraums 12 rotiert.

Zweckmäßig erfolgt die Einbringung des Sekundär-Kraftstoffs an einem axialen Stirnende 21 des Zylinderraums 12, vergleiche hierzu insbesondere Fig. 4. Wie erwähnt weist die Sekundär-Kraftstoffzuführung 6 zu diesem Zweck vorzugsweise eine Einspritzdüse 13 auf, die an der axialen Stirnseite 21 montiert ist. Die Einbringung des Sekundär-Kraftstoffs erfolgt dabei koaxial zum Zylinderraum 12, das heißt, der Sekundär-Kraftstoff wird vom Stirnende 21 her zentral in axialer Richtung eingebracht, insbesondere eingedüst. Dementsprechend düst die Einspritzdüse 13 den Sekundär-Kraftstoff in das Zentrum der Zyklonströmung des Abgasteilstroms 15, 15' ein.

Vorzugsweise ist die Rezirkulationseinheit 8 mit einem Verdampfungskörper 22 ausgestattet, der im Zirkulationsraum 12 angeordnet ist. Der Verdampfungskörper 22 wird von der Sekundär-Kraftstoffzuführung 6, also über die Einspritzdüse 13 mit flüssigem Sekundär-Kraftstoff beaufschlagt. Der Verdampfungskörper 22 nimmt den flüssigen Sekundär-Kraftstoff zunächst auf und ermöglicht dadurch eine Verdampfung desselben und setzt den dampfförmigen Sekundär-Kraftstoff der Abgasteilströmung 15 aus. Beispielsweise handelt es sich beim Verdampfungskörper 22 um ein poröses Material, das eine extrem große Verdampferoberfläche aufweist, auf der sich der flüssige Sekundär-Kraftstoff verteilt. Beispielsweise kann es sich beim Material des Verdampferkörpers 22 um ein metallisches oder keramisches Faservlies handeln.

Entsprechend Fig. 4 ist der Verdampfungskörper 22 vorzugsweise hülsenförmig ausgestaltet und im Zirkulationsraum koaxial angeordnet. Der Verdampfungskörper 22 ist an dem der Sekundär-Kraftstoffzuführung 6 zugewandten axialen Ende offen, so dass über die Einspritzdüse 13 der flüssige Sekundär-Kraftstoff in das Innere des Verdampfungskörpers 22 eingebracht werden kann. Im Unterschied dazu ist der Verdampfungskörper 22 an einem von der Sekundär-Kraftstoffzuführung 6 abgewandten axialen Ende geschlossen. Die Sekundär-Kraftstoffzuführung 6 beaufschlagt somit eine Innenseite 23 des Verdampfungskörpers 22 mit dem flüssigen Sekundär-Kraftstoff. Der poröse Verdampfungskörper 22 nimmt den flüssigen Sekundär-Kraftstoff auf und transportiert diesen durch seine Wandung hindurch an seine Außenseite 24. Spätestens an dieser Außenseite 24 erfolgt die Verdampfung des Sekundär-Kraftstoffs. Dort ist der verdampfte Sekundär-Kraftstoff dem Abgasteilstrom 15 ausgesetzt, der den dampfförmigen Sekundär-Kraftstoff aufnimmt und abtransportiert.

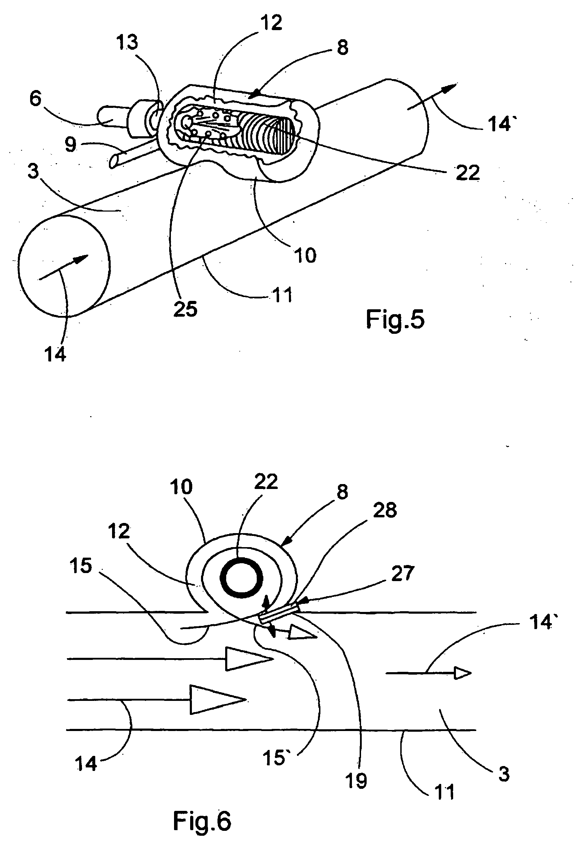

Um die Verdampfungswirkung des Verdampfungskörpers 22 zu unterstützen, kann wie hier eine elektrische Heizung 25 vorgesehen sein, die wärmeübertragend mit dem Verdampfungskörper 22 gekoppelt ist. Beispielsweise ist die Heizung 25 durch eine Heizwendel realisiert, die an der Außenseite 24 des Verdampfungskörpers 22 angeordnet ist. Ebenso ist es möglich, eine derartige Heizung 25 an der Innenseite 23 des Verdampfungskörpers 22 anzubringen. Des weiteren ist es grundsätzlich auch möglich, eine derartige Heizung 25 in den Verdampfungskörper 22 zu integrieren, insbesondere zwischen Außenseite 24 und Innenseite 23. Eine Anordnung mit innenliegender Heizung 25 ist in Fig. 5 wiedergegeben.

Den Fig. 4 und 5 ist außerdem zu entnehmen, dass die Sekundär-Luftzuführung 9 ebenfalls zweckmäßig so an die Rezirkulationseinheit 8 angeschlossen ist, dass die Sekundär-Luft in den Zirkulationsraum 12 und vorzugsweise in das Innere des hohlzylindrischen Verdampfungskörpers 22 eingebracht wird.

Gemäß Fig. 4 kann die Rezirkulationseinheit 8 außerdem mit einer Zündeinrichtung 26 ausgestattet sein, zum Beispiel in Form einer Glühkerze. Auf diese Weise ist es möglich, das im Zirkulationsraum 12 gebildete Kraftstoffdampf-Abgas/Luft-Gemisch noch innerhalb der Rezirkulationseinheit 8 zu zünden, um dieses Gemisch zumindest teilweise zu verbrennen. Hierbei wird zumindest ein Teil der zur Aufheizung des Partikelfilters 4 bzw. des NOₓ-Speicherkatalysators 5 benötigten Wärme generiert. Gegebenenfalls kann hierdurch bei niedrigen Temperaturen im Abgashauptstrom 14 auch der Oxidationskatalysator 7 aufgeheizt werden. Gleichzeitig führt die Temperaturerhöhung in der Rezirkulationseinheit 8 zu einer verbesserten Verdampfung des Sekundär-Kraftstoffs am Verdampfungskörper 22. Durch die Steuerung der zugeführten Sekundär-Luftmenge kann außerdem der Anteil des innerhalb der Rezirkulationseinheit 8 umgesetzten Kraftstoffmenge gesteuert werden.

Für die ordnungsgemäße Funktion der Einbringung des Sekundär-Kraftstoffs stellt die Menge des abgezweigten und wieder rückgeführten, also insoweit rezirkulierten Abgasteilstroms 15, 15' eine wichtige Größe dar. Die Menge des rezirkulierten Abgases kann über die geometrische Anordnung und durch das Ausmaß der Überschneidung zwischen Längsabschnitt 11 des Abgasstrangs 3 und Gehäuse 10 der Rezirkulationseinheit 8 beeinflusst werden. Dabei führt eine geringe Überschneidung zu einer geringeren rezirkulierten Abgasmenge, während eine größere Überschneidung dann zu einer größeren rezirkulierten Abgasmenge führt. Des weiteren ergibt sich automatisch eine Abhängigkeit der rezirkulierten Abgasmenge von der Menge des Abgashauptstroms im Abgasstrang 3. Ein höherer Abgasmassenstrom im Abgasstrang 3 führt zu einem höheren Massenstrom im rezirkulierten Abgas und gleichzeitig zu einer höheren Rotationsgeschwindigkeit für den Abgasteilstrom 15 im Zirkulationsraum 12.

Entsprechend Fig. 3 führt die koaxiale Anordnung des hohlzylindrischen Verdampfungskörpers 22 im zylindrischen Zirkulationsraum 12 in diesem zu einem ringsegmentförmigen Strömungspfad. Entlang dieses Strömungspfads wird der Abgasteilstrom 15, 15' von der Anströmkante 19 außen um den Verdampfungskörper 22 herum zur Abströmkante 20 geführt. Über die geometrische Anordnung kann außerdem die Abhängigkeit der rezirkulierten Abgasmenge von der Gesamtmenge des Abgashauptstroms beeinflusst werden. Bei einer günstigen Auslegung der Überschneidung kann insbesondere die Massenstrom-Abhängigkeit derart beeinflusst werden, dass die rezirkulierte Abgasmenge im gleichen Maße mit der Abgasmenge im Abgashauptstrom zunimmt wie die erforderliche einzudüsende Kraftstoffmenge. Die erforderliche einzudüsende Kraftstoffmenge wird zweckmäßig ihrerseits aus den Daten des Abgäshauptstroms berechnet.

Entsprechend Fig. 6 kann zur Beeinflussung der rezirkulierten Abgasmenge eine Steuereinrichtung 27 vorgesehen sein. Die Steuereinrichtung 27 kann zweckmäßig so ausgestaltet sein, dass sie in Abhängigkeit der Abgastemperatur die Menge des in den Zirkulationsraum 12 eintretenden Abgasteilstroms 15 steuert. Beispielsweise umfasst die Steuereinrichtung 27 ein Stellelement 28, das an der Anströmkante 19 angeordnet ist. Zusätzlich oder alternativ kann die Steuereinrichtung 27 außerdem ein hier nicht gezeigtes Stellelement aufweisen, das an der Abströmkante 20 angeordnet ist. Das Stellelement 28 kann nun in Abhängigkeit der Abgastemperatur seine Anstellung gegenüber der Abgashauptströmung 14, insbesondere automatisch, ändern. Beispielsweise kann das Stellelement 28 hierzu zumindest teilweise aus einem Bimetall bestehen. Beispielsweise reduziert das Stellelement 28 mit zunehmender Abgastemperatur seine Anstellung gegenüber der Abgashauptströmung 14, wodurch der Massenstrom des in den Zirkulationsraum 12 eingeleiteten Abgasteilstroms 15 entsprechend reduziert wird. Bei höheren Abgastemperaturen muss auch weniger Sekundär-Kraftstoff zugeführt werden, um die gewünschte Temperaturerhöhung für die Regeneration des Partikelfilters 4 bzw. des NOₓ-Speicherkatalysators 5 durchführen zu können.

Da bei der erfindungsgemäßen Rezirkulationseinheit 8 der Zirkulationsraum 12 an sich unabhängig von der Abgashauptströmung im Abgasstrang 3 ist, kann in der Rezirkulationseinheit 8 eine ordnungsgemäße Funktion für die Zuführung des Sekundär-Kraftstoffs sowie dessen Verdampfung erreicht werden, und zwar unabhängig vom aktuellen Abgasmassenstrom im Abgasstrang 3.

Während bei einer herkömmlichen elektrischen Beheizung eines Verdampfungskörpers 22, der unmittelbar dem Abgasstrom im Abgasstrang 3 ausgesetzt ist, ein beträchtlicher Anteil der elektrisch erzeugten Wärme mit dem Abgas ausgetragen wird, steht bei der erfindungsgemäßen Rezirkulationseinheit 8 ein erheblich größerer Wärmeanteil zur Verdampfung des Sekundär-Kraftstoffs zur Verfügung, da der Verdampfungskörper 22 nur mit dem vergleichsweise kleinen Abgasteilstrom 15 beaufschlagt wird. Der Wärmeaustrag aus der Rezirkulationseinheit 8 ist dabei vergleichsweise gering, so dass die elektrische Heizung 25 des Verdampfungskörpers 22 mit vergleichsweise geringer Leistung arbeiten kann.

Vorteilhaft ist außerdem, dass mit Hilfe der erfindungsgemäßen Rezirkulationseinheit 8 dem Abgashauptstrom 14 bedarfsabhängig eine im wesentlichen konstante und definierte Kraftstoffmenge in Form eines Abgas/Luft-Kraftstoffdampf-Gemischs zugeführt werden kann.

Bei besonders niedrigen Abgastemperaturen kann die Rezirkulationseinheit 8 mit Hilfe der Sekundär-Luftzuführung 9 und mit Hilfe der Zündeinrichtung 26 auch so betrieben werden, dass zumindest ein Teil des Sekundär-Kraftstoffs in der Rezirkulationseinheit 8 oxidiert wird.

Die Menge des zu verdampfenden Sekundär-Kraftstoffs wird über die Menge des eingespritzten Sekundär-Kraftstoffs bestimmt. Zweckmäßig kann hierzu die Einspritzdüse 13 als impulsgesteuerte, getaktete Einspritzdüse 13 ausgeführt werden. Eine derartige Einspritzdüse 13 kann beispielsweise analog zu einer motorischen Einspritzdüse ausgeführt sein. Insbesondere lässt sich dabei die zudosierte Kraftstoffmenge durch die Wahl von Impulsfrequenz und Impulsdauer dynamisch an die Abgasbedingungen, wie z.B. Abgastemperatur und Abgasmassenstrom, anpassen.

Die axiale Länge des hohlzylindrischen Verdampfungskörpers 22 kann beispielsweise in Abhängigkeit von dem mit der Einspritzdüse 13 realisierbaren Einspritzwinkel abhängen.

Bei ausreichend hoher Abgastemperatur kann der Verdampfungskörper 22 durch den im Strömungspfad um den Verdampfungskörper 22 rotierenden Abgasteilstrom 15 auf eine Temperatur aufgeheizt werden, die für die Verdampfung des Sekundär-Kraftstoffs bereits ausreichend hoch ist. In der Folge ist dann eine zusätzliche Beheizung des Verdampfungskörpers 22 mit Hilfe der Heizung 25 nicht erforderlich. Im Unterschied dazu kann bei niedrigen Abgastemperaturen eine zusätzliche Beheizung des Verdampfungskörpers 22 mit Hilfe der Heizung 25 erforderlich sein.

Bei der Anordnung der elektrischen Heizeinrichtung 25 an der Innenseite 23 des Verdampfungskörpers 22 ist vorteilhaft, dass die Wärmeabgabe von der Heizung 25 an das an der Außenseite 24 des Verdampfungskörpers 22 rotierende Abgas geringer ist und somit ein geringerer Wärmeverlust entsteht.

Für die Regeneration des NOₓ-Speicherkatalysators 5 können motorseitig Abgaszustände erzeugt werden, bei denen das Abgas kurzzeitig bis auf einen Lambda-Wert von ca. 1,05 bis 1,1 gefahren wird. Unter Umständen können auch kleinere Lambda-Werte auftreten. Entsprechende Werte können grundsätzlich auch bei Volllast der Brennkraftmaschine 1 auftreten.

In derartigen Betriebszuständen kann es wünschenswert sein, das Gemisch aus Sekundär-Kraftstoff und Abgasteilstrom 15 bereits in der Rezirkulationseinheit 8 mit zusätzlichem Sauerstoff zu oxidieren. Das zündfähige Gemisch wird dabei bereits an der Oberfläche des Verdampfungskörpers 22 gebildet. Zur Verbesserung dieser Gemischbildung bzw. zur Verbesserung der Eindüsung der Sekundär-Luft können strömungsbeeinflussende Maßnahmen ergriffen werden. Beispielsweise kann die Sekundär-Luft mit einem zusätzlichen Drall in den Verdampfungskörper 22 eingeleitet werden.

## Patentansprüche

1. Abgasanlage für eine Brennkraftmaschine (1), insbesondere in einem Kraftfahrzeug,
- mit einem Abgasstrang (3) zum Abführen von Abgas der Brennkraftmaschine (1),
- mit einer Sekundär-Kraftstoffzuführung (6) zum Einbringen von Sekundär-Kraftstoff in das Abgas der Brennkraftmaschine (1),
- wobei eine Rezirkulationseinheit (8) vorgesehen ist, die an den Abgasstrang (3) angeschlossen ist und an die die Sekundär-Kraftstoffzuführung (6) angeschlossen ist, so dass die Einbringung von Sekundär-Kraftstoff in das Abgas über oder durch die Rezirkulationseinrichtung (8) erfolgt,
- wobei die Rezirkulationseinrichtung (8) einen Zirkulationsraum (12) aufweist, dem ein Abgasteilstrom (15) aus dem Abgasstrang (3) zugeführt wird, in dem der Sekundär-Kraftstoff in den Abgasteilstrom (15) eingebracht wird und aus dem der modifizierte Abgasteilstrom (15') in den Abgasstrang (3) zurückgeführt wird.

2. Abgasanlage nach Anspruch 1,
**dadurch gekennzeichnet,**
- **dass** der Zirkulationsraum (12) zylindrisch ausgebildet ist und einen Längsabschnitt (11) des Abgasstrangs (3) unter Ausbildung einer Verbindungsöffnung (16) schneidet,
- **dass** eine Längsrichtung (17) des Zirkulationsraums (12) gegenüber einer Längsrichtung (18) des Längsabschnitts (11) geneigt verläuft,
- **dass** die Verbindungsöffnung (16) eine Anströmkante (19) aufweist, über die der Abgasteilstrom (15) aus dem Abgasstrang (3) in den Zirkulationsraum (12) eindringt,
- **dass** die Verbindungsöffnung (16) eine Abströmkante (20) aufweist, die im Abgasstrang (3) stromauf der Anströmkante (19) angeordnet ist und über die der modifizierte Abgasteilstrom (15) aus dem Zirkulationsraum (12) in den Abgasstrang (3) zurückgeführt wird.

3. Abgasanlage nach Anspruch 2,
**dadurch gekennzeichnet,**
**dass** die Längsrichtung (17) des Zirkulationsraums (12) quer zur Längsrichtung (18) des Längsabschnitts (11) ausgerichtet ist.

4. Abgasanlage nach Anspruch 2 oder 3,
**dadurch gekennzeichnet,**
**dass** die Einbringung des Sekundär-Kraftstoffs an einem axialen Stirnende (21) des Zirkulationsraums (12) koaxial dazu erfolgt.

5. Abgasanlage nach einem der Ansprüche 1 bis 4,
**dadurch gekennzeichnet,**
**dass** im Zirkulationsraum (12) ein Verdampfungskörper (22) angeordnet ist, den die Sekundär-Kraftstoffzuführung (6) mit flüssigem Sekundär-Kraftstoff beaufschlagt und an dem der Sekundär-Kraftstoff verdampft und vom Abgasteilstrom (15) mitgenommen wird .

6. Abgasanlage nach Anspruch 5 sowie einem der Ansprüche 2 bis 4,
**dadurch gekennzeichnet,**
- **dass** der Verdampfungskörper (22) hülsenförmig ausgestaltet und koaxial im Zirkulationsraum (12) angeordnet ist,
- **dass** die Sekundär-Kraftstoffzuführung (6) eine Innenseite (23) des Verdampfungskörpers (22) mit Sekundär-Kraftstoff beaufschlagt,
- **dass** der Verdampfungskörper (22) den verdampften Sekundär-Kraftstoff an einer Außenseite (24) dem Abgasteilstrom (15) aussetzt.

7. Abgasanlage nach Anspruch 6,
**dadurch gekennzeichnet,**
**dass** im Zirkulationsraum (12) ein ringsegmentförmiger Strömungspfad ausgebildet ist, der den Abgasteilstrom (15) von der Anströmkante (19) außen um den Verdampfungskörper (22) herum zur Abströmkante (20) führt.

8. Abgasanlage nach einem der Ansprüche 5 bis 7,
**dadurch gekennzeichnet,**
**dass** der Verdampfungskörper (22) mit einer elektrischen Heizung (25) wärmeübertragend gekoppelt ist.

9. Abgasanlage nach einem der Ansprüche 1 bis 8,
**dadurch gekennzeichnet,**
**dass** eine Sekundär-Luftzuführung (9) vorgesehen ist, die an die Rezirkulationseinheit (8) angeschlossen ist und die Sekundär-Luft in den Zirkulationsraum (12) einbringt.

10. Abgasanlage nach Anspruch 9 sowie nach einem der Ansprüche 6 bis 8,
**dadurch gekennzeichnet,**
**dass** die Sekundär-Luftzuführung (9) die Sekundär-Luft dem Verdampfungskörper (22) an dessen Innenseite (23) zuführt.

11. Abgasanlage nach einem der Ansprüche 1 bis 10,
**dadurch gekennzeichnet,**
**dass** eine Steuereinrichtung (27) vorgesehen ist, die in Abhängigkeit der Abgastemperatur die Menge des in den Zirkulationsraum (12) eintretenden Abgasteilstroms (15) steuert.

12. Abgasanlage nach Anspruch 11 sowie zumindest nach Anspruch 2,
**dadurch gekennzeichnet,**
**dass** die Steuereinrichtung (27) ein an der Anströmkante (19) und/oder ein an der Abströmkante (20) angeordnetes Stellelement (28) aufweist, das seine Anstellung gegenüber der jeweiligen Strömung in Abhängigkeit der Abgastemperatur ändert.

13. Abgasanlage nach Anspruch 12,
**dadurch gekennzeichnet,**
**dass** das Stellelement (28) zumindest teilweise aus einem Bimetall besteht.

## Claims

1. An exhaust system for an internal combustion engine (1), in particular in a motor vehicle,
- having an exhaust line (3) for discharging exhaust gas from the internal combustion engine (1),
- having a secondary fuel supply (6) for introducing secondary fuel into the exhaust gas of the internal combustion engine (1),
- whereby a recirculation device (8) which is provided is connected to the exhaust line (3) and to the secondary fuel supply (6) so that the secondary fuel is introduced into the exhaust gas via or through the recirculation device (8),
- whereby the recirculation device (8) has a circulation space (12) which receives an exhaust gas substream (15) from the exhaust line (3), in which the secondary fuel is introduced into the exhaust gas substream (15) and from which the modified exhaust gas substream (15') is returned back to the exhaust line (3).

2. The exhaust system according to claim 1,
**characterized in that**
- The circulation space (12) is designed to be cylindrical and intersects a longitudinal section (11) of the exhaust line (3), forming a connecting opening (16),
- a longitudinal direction (17) of the circulation space (12) runs at an inclination with respect to a longitudinal direction (18) of the longitudinal section (11),
- the connecting opening (16) has an oncoming flow edge (19) over which the exhaust gas substream (15) from the exhaust line (3) enters the circulation space (12),
- the connecting opening (16) has an outgoing flow edge (20) which is situated in the exhaust line (3) upstream from the oncoming flow edge (19) and via which the modified exhaust substream (15') is recycled from the circulation space (12) into the exhaust line (3).

3. The exhaust system according to claim 2,
**characterized in that**
the longitudinal direction (17) of the circulation space (12) is aligned across the longitudinal direction (18) of the longitudinal section (11).

4. The exhaust system according to claim 2 or 3,
**characterized in that**
the secondary fuel is introduced at an axial end (21) of the circulation space (12) coaxially with the former.

5. The exhaust systems according to one of claims 1 through 4,
**characterized in that**
an evaporator body (22) which is provided in the circulation space (12) receives the secondary fuel supply (6) of liquid secondary fuel and the secondary fuel evaporates on the evaporator body and is entrained by the exhaust gas substream (15).

6. The exhaust system according to claim 5 and any one of claims 2 through 4,
**characterized in that**
- the evaporator body (22) is designed in the form of a sleeve and is arranged coaxially in the circulation space (12),
- the secondary fuel supply (6) supplies secondary fuel to the inside (23) of the evaporator body (22),
- the evaporator body (22) exposes the vaporized secondary fuel to the exhaust gas substream (15) on the outside (24).

7. The exhaust system according to claim 6,
**characterized in that**
a flow path in the form of a ring segment is created in the circulation space (12), carrying the exhaust gas substream (15) from the oncoming flow edge (19) outward around the evaporator body (22) to the outgoing flow edge (20).

8. The exhaust system according to any one of claims 5 through 7,
**characterized in that**
the evaporator body (22) is connected to an electric heater (25) in a heat-transmitting connection.

9. The exhaust system according to any one of claims 1 through 8,
**characterized in that**
a secondary air feed (9) which is provided is connected to the recirculation device (8) and introduces the secondary air into the circulation space (12).

10. The exhaust system according to Claim 9 and any one of claims 6 through 8,
**characterized in that**
the secondary air feed (9) supplies the secondary air to the evaporator body (22) on its outside (23).

11. The exhaust system according to any one of claims 1 through 10,
**characterized in that**
a control unit (27) is provided, controlling the amount of the exhaust substream (15) entering the circulation space (12) as a function of the exhaust gas temperature.

12. The exhaust system according to claim 11 and at least according to claim 2,
**characterized in that**
the control unit (27) has an actuator element (28) which is arranged on the oncoming flow edge (19) and/or on the outgoing flow edge (20) and changes its setting angle with respect to the particular flow as a function of the exhaust gas temperature.

13. The exhaust system according to Claim 12,
**characterized in that**
the actuator element (28) consists at least partially of a bimetal.

## Revendications

1. Dispositif d'échappement pour un moteur à combustion interne (1), notamment dans un véhicule automobile,
- avec une conduite d'échappement (3) pour l'évacuation des gaz d'échappement du moteur à combustion interne (1),
- avec une alimentation en carburant secondaire (6) pour l'introduction de carburant secondaire dans les gaz d'échappement du moteur à combustion interne (1),
- une unité de recirculation (8) raccordée à la conduite d'échappement (3) et raccordée à l'alimentation en carburant secondaire (6) étant prévue, de sorte que l'introduction de carburant secondaire dans les gaz d'échappement s'effectue à travers ou par le biais du dispositif de recirculation (8),
- le dispositif de recirculation (8) étant muni d'une chambre de circulation (12) à laquelle est apporté un flux de gaz d'échappement partiel (15) de la conduite d'échappement (3), dans laquelle le carburant secondaire est introduit dans le flux de gaz d'échappement partiel (15) et duquel le flux de gaz d'échappement (3) partiel modifié (15') est ramené dans la conduite d'échappement.

2. Dispositif d'échappement selon la revendication 1,
**caractérisé en ce que**
- la chambre de circulation (12) a une forme cylindrique et coupe un tronçon longitudinal (11) de la conduite d'échappement (3) en formant une ouverture de communication (16),
- une direction longitudinale (17) de la chambre de circulation (12) s'étend de manière inclinée par rapport à une direction longitudinale (18) du tronçon longitudinal (11),
- l'ouverture de communication (16) est munie d'un bord d'attaque (19) par lequel le flux de gaz d'échappement partiel (15) de la conduite d'échappement (3) pénètre dans la chambre de circulation (12),
- l'ouverture de communication (16) est munie d'un bord de fuite (20) disposé, dans la conduite d'échappement (3), en amont par rapport au bord d'attaque (19), et par lequel le flux de gaz d'échappement partiel modifié (15') est ramené de la chambre de circulation (12) dans la conduite d' échappement (3).

3. Dispositif d'échappement selon la revendication 2,
**caractérisé en ce que**
la direction longitudinale (17) de la chambre de circulation (12) est orientée perpendiculairement à la direction longitudinale (18) du tronçon longitudinal (11).

4. Dispositif d'échappement selon la revendication 2 ou 3,
**caractérisé en ce que**
l'introduction du carburant secondaire s'effectue à une extrémité frontale axiale (21) de la chambre de circulation (12), de manière coaxiale à celle-ci.

5. Dispositif d'échappement selon l'une des revendications 1 à 4,
**caractérisé en ce que**
un corps de vaporisation (22), alimenté en carburant secondaire liquide par l'alimentation en carburant secondaire (6), et sur lequel le carburant secondaire se vaporise et est entraîné par le flux de gaz d'échappement partiel (15), est disposé dans la chambre de circulation (12).

6. Dispositif d'échappement selon la revendication 5, ainsi que selon l'une des revendications 2 à 4,
**caractérisé en ce que**
- le corps de vaporisation (22) a une forme de manchon et est disposé de manière coaxiale dans la chambre de circulation (12),
- l'alimentation en carburant secondaire (6) alimente un côté intérieur (23) du corps de vaporisation (22) en carburant secondaire,
- le corps de vaporisation (22) expose le carburant secondaire vaporisé sur un côté extérieur (24) au flux de gaz d'échappement partiel (12).

7. Dispositif d'échappement selon la revendication 6,
**caractérisé en ce que**
un tracé d'écoulement en forme de segment d'anneau, qui guide le flux de gaz d'échappement partiel (15) autour de l'extérieur du corps de vaporisation (22) depuis le bord d'attaque (19) jusqu'au bord de fuite (20) est formé dans la chambre de circulation (12).

8. Dispositif d'échappement selon l'une des revendications 5 à 7,
**caractérisé en ce que**
le corps de vaporisation (22) est couplé, pour la transmission de la chaleur, avec un chauffage électrique (25).

9. Dispositif d'échappement selon l'une des revendications 1 à 8,
**caractérisé en ce que**
une alimentation en air secondaire (9), reliée à l'unité de recirculation (8) et introduisant l'air secondaire dans la chambre de circulation (12), est prévue.

10. Dispositif d'échappement selon la revendication 9, ainsi que selon l'une des revendications 6 à 8,
**caractérisé en ce que**
l'alimentation en air secondaire (9) alimente le corps de vaporisation (22) en air secondaire sur le côté intérieur (23) de celui-ci.

11. Dispositif d'échappement selon l'une des revendications 1 à 10,
**caractérisé en ce que**
un dispositif de commande (27), contrôlant la quantité du flux de gaz d'échappement partiel (15) pénétrant dans la chambre de circulation (12) en fonction de la température des gaz d'échappement, est prévu.

12. Dispositif d'échappement selon la revendication 11, ainsi que selon au moins la revendication 2,
**caractérisé en ce que**
le dispositif de commande (27) est muni d'un élément réglable (28) disposé sur le bord d'attaque (19) et/ou sur le bord de fuite (20), qui modifie son réglage par rapport à l'écoulement concerné en fonction de la température des gaz d'échappement.

13. Dispositif d'échappement selon la revendication 12,
**caractérisé en ce que**
l'élément réglable (28) est constitué au moins partiellement d'un bimétal.
